# EUROPÄISCHE PATENTSCHRIFT

(11) **EP 2 197 617 B1**
(45) Veröffentlichungstag und Bekanntmachung des Hinweises auf die Patenterteilung: **26.10.2011**
(21) Anmeldenummer: 08804157.9
(22) Anmeldetag: 12.09.2008
(51) Int. Cl.: B23H 3/10

(54) **VORRICHTUNG UND VERFAHREN ZUR ELEKTROCHEMISCHEN BEARBEITUNG**
DEVICE AND METHOD FOR ELECTROCHEMICAL TREATMENT
DISPOSITIF ET PROCÉDÉ DE TRAITEMENT ÉLECTROCHIMIQUE

(30) Priorität: 14.09.2007 DE 102007049495
(43) Veröffentlichungstag der Anmeldung: 23.06.2010
(73) Patentinhaber: Extrude Hone GmbH, 42859 Remscheid (DE)
(72) Erfinder: HUSS, Rainer, 87474 Buchenberg (DE); MATT, Patrick, 87616 Marktoberdorf (DE); WODRICH, René, 87435 Kempten (DE); BURMESTER, Ulrich Franz, 88410 Bad Wurzach (DE)
(74) Vertreter: Prinz & Partner
(86) Internationale Anmeldenummer: PCT/EP2008/062196
(87) Internationale Veröffentlichungsnummer: WO 2009/037209

(56) Entgegenhaltungen:
- EP-A- 1 714 725
- WO-A-97/35810
- DE-A1- 3 542 820

## Beschreibung

Die vorliegende Erfindung betrifft ein Verfahren und eine Vorrichtung zur elektrochemischen Bearbeitung wenigstens eines Bauteils. Die elektrochemische Bearbeitung von Bauteilen erlaubt eine besonders genaue Bearbeitung von elektrisch leitenden und damit metallischen Bauteilen. Die Bearbeitung erfolgt nahezu verschleißfrei und besonders werkstoffschonend. Die Erfindung findet insbesondere im industriellen Bereich und bei großen Stückzahlen Anwendung.

Das elektrochemische Bearbeiten funktioniert nach dem Prinzip des galvanischen Abtrags. Das Bauteil wird dazu beispielsweise anodisch und das Werkzeug kathodisch kontaktiert. Durch einen zwischen dem Bauteil und dem Werkzeug verbleibenden Arbeitsspalt wird eine leitfähige Flüssigkeit, die auch als Elektrolyt bezeichnet wird, gepumpt. Beim Anlegen einer elektrischen Spannung zwischen Bauteil und Werkzeug fließt ein Strom und initiiert eine Elektrolyse durch die Metallionen aus dem Bauteil gelöst werden. Hierbei wird ein definierter Abtrag des Werkstoffes erzielt. Mit Hilfe des elektrochemischen Bearbeitens können Radien und Konturen mit großer Genauigkeit selbst an schwer zugänglichen Stellen gefertigt werden. Weiterhin ist es möglich, verschiedene Bauteilpositionen simultan zu bearbeiten. Da kein direkter Kontakt zwischen dem Werkzeug und dem Bauteil entsteht, erfolgt die Bearbeitung nahezu verschleißfrei und es ist eine sehr konstante Prozessqualität gewährleistet. Weiterhin werden in das zu bearbeitende Bauteil keine mechanischen Spannungen oder thermischen Einflüsse induziert. Selbst schwer zerspanbare Werkstoffe lassen sich mit dieser Bearbeitungsmethode problemlos bearbeiten. Aufgrund kurzer Zykluszeiten, die bis zu wenigen Sckunden reichen können, ist es möglich größere Stückzahlen mit hoher Prozesssicherheit zu bearbeiten. Besonders umfangreichen Einsatz findet dieses Verfahren bei der Nachbearbeitung von Kanälen bei Einspritzdüsen.

Beim Betrieb von Vorrichtungen zur elektrochemischen Bearbeitung von Bauteilen hat es sich als nachteilig erwiesen, dass unter bestimmten Umständen Ablagerungen entstehen können. So können die bei der elektrochemischen Bearbeitung gelösten Metalle beispielsweise Metallhydroxide bilden. Diese Metallhydroxide können Probleme verursachen, beispielsweise indem sie Ablagerungen, insbesondere in Form von Schichten auf den Werkstücken und Kathoden bilden. Unter Umständen kann es beispielsweise auch bei sehr dünnen Kathodenrohren und anderen kleineren Öffnungen vorkommen, dass diese durch derartige Ablagerungen ganz oder teilweise verschlossen werden und somit für das Elektrolyt blockiert sind.

Aus der WO-A1-97/35810 ist ein Verfahren zur sukzessiven Abtrennung von Eisen- und Chromverbindungen aus einem flüssigen Elektrolyt bekannt, das zur Bearbeitung von metallischen Werkstoffen bei elektrochemischen Prozessen eingesetzt wird. Dabei wird der pH-Wert der gesamten Elektrolytmenge erst erhöht und nachfolgend reduziert. Dieses Dokument zeigt auch eine Vorrichtung mit den Merkmalen des Oberbegriffs des Anspruchs 1.

Die DE-A1-35 42 820 beschreibt ebenfalls ein Verfahren zur Regeneration eines Elektrolyten, wobei der pH-Wert der gesamten Elektrolytmenge zuerst erhöht und nachfolgend reduziert wird, so dass im Elektrolyt enthaltende Metallhydroxide ausgefällt werden.

Die EP-Al-1 714 725 offenbart ein Verfahren zur elektrochemischen Bearbeitung von metallischen Werkstücken, wobei die chemischen und physikalischen Parameter des Elektrolyten im Elektrodenzwischenraum durch die Einstellung eines Zwischenstromimpulses eingestellt werden.

Aufgabe der Erfindung ist es daher, die sich aus dem Stand der Technik ergebenden Probleme zumindest teilweise zu lösen und insbesondere eine Vorrichtung und ein Verfahren anzugeben, mit deren Hilfe derartige Ablagerungen zumindest reduziert wenn nicht insgesamt vermieden werden.

Diese Aufgaben werden mit einem Verfahren gemäß den Merkmalen des Patentanspruchs 1 sowie einer Vorrichtung gemäß den Merkmalen des Patentanspruchs 6 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Vorliegend wird die Aufgabe durch ein Verfahren zur elektrochemischen Bearbeitung wenigstens eines Bauteils gelöst, wobei das Bauteil zumindest teilweise mit einem Elektrolyt umschlossen wird und das Verfahren die Schritte umfasst:
a) Erzeugung wenigstens einer Änderung eines pH-Wertes des Elektrolyts;
b) Zuführen des pH-Wert-veränderten Elektrolyts zu dem wenigstens einen Bauteil.

Bei dem hier benannten Verfahren handelt es sich um ein elektrochemisches Bearbeitungsverfahren zur Abtragen von Material an einem Werkstück, wobei zwischen Werkstück und Werkzeug eine elektrische Spannung angelegt ist und in einem Zwischenbereich (Spalt) von Werkstück und Werkzeug wenigstens zeitweise ein Elektrolyt eingespeist wird. "Erzeugen" eines Elektrolyts bedeutet insbesondere, dass eine entsprechende Zusammensetzung der Elektrolyts aktiv so eingestellt, gemischt und/oder zusammengestellt wird, dass der gewünschte pH-Wert vorliegt. Diese (gegebenenfalls kurzzeitig zwischengespeicherte) Elektrolyt-Menge wird nun gezielt dem vorbestimmten Bearbeitungsprozess zugeführt. Dabei kann der pH-Wert grundsätzlich während des Verfahrens zur elektrochemischen Bearbeitung des Bauteils variieren und/oder auch (zeitweise) konstant gehalten werden. Ganz besonders ist mit "Erzeugen" gemeint, dass das Elektrolyt erst hergestellt wird, es sich also nicht nur um eine reine Zugabe eines Additivs zu einem existierenden Elektrolyt handelt.

Es hat sich überraschenderweise herausgestellt, dass in einem sauren Elektrolyt die gelösten Metalle keine Metallhydroxide ausbilden. Besteht die pH-Wert-Änderung des Elektrolyts somit beispielsweise in einer Absenkung des pH-Werts, so kann das so veränderte Elektrolyt in dem Bearbeitungsraum zur elektrochemischen Bearbeitung eingeleitet werden. Während der nachfolgenden elektrochemisehen Bearbeitung entstehen dabei keinerlei der zuvor beschriebenen und im Stand der Technik unerwünschten Ablagerungen innerhalb des Bearbeitungsraumes oder an anderer Stelle der Maschine. Neben der genannten vorteilhaften pH-Wertverminderung kann der pH-Wert des Elektrolyts aber auch erhöht werden. Alternativ kann der pH-Wert gleichzeitig in einem Teil des Elektrolyts erhöht und in einem weiteren Teil des Elektrolyts vermindert werden. Zu diesem Zweck wird das Elektrolyt also gegebenenfalls im Hinblick auf seinen pH-Wert (ständig ggf. insitu) überwacht bzw. ggf. geregelt bzw. kontrolliert, so dass für die gegebene Bearbeitungssituation eine Bildung insbesondere von Metallhydroxiden deutlich reduziert wird, und gerade z. B. unter einem Minimalwert gehalten wird.

### Dies gesheht

in der Weise, dass der pH-Wert wenigstens in einem ersten Teilstrom des Elektrolyts vermindert und/oder in wenigstens einem zweiten Teilstrom des Elektrolyts erhöht wird. Damit wird es möglich, den pH-Wert verminderten Teilstrom durch den Bearbeitungsraum zur elektrochemischen Bearbeitung zu leiten und den pH-Wert erhöhten Teilstrom des Elektrolyts an diesem Bearbeitungsraum vorbeizuleiten. Auf diese Weise kann beispielsweise ein ursprünglich pH-Wert neutrales Elektrolyt verwendet werden und gleichzeitig die erfindungsgemäße Aufgabenstellung gelöst werden.

Beide Teilströme werden nach dem wenigstens einen Bauteil zur Neutralisation zusammengeführt. Zum Einen ist es dann nicht mehr erforderlich, die Vorrichtung im Bereich hinter der Neutralisationsstelle säure- oder basenfest auszulegen, wie es andernfalls für Elektrolyte mit besonders hohen oder niedrigen pH-Werten erforderlich wäre. Insbesondere kann in bestimmten Teilen der Bearbeitungsanlage auf Säure oder Basen festen Bauteile wie beispielsweise Rohrleitungen und Pumpen verzichtet werden, wenn das Elektrolyt in diesen Teilbereichen wieder neutralisiert ist. Weiterhin hat es sich herausgestellt, dass bei der Neutralisation die gelösten Metalle so genannte Hydroxide bilden und mit bekannten Mitteln, wie beispielsweise Filteranlagen aus dem Elektrolyt abgeschieden oder ausgefällt werden können.

Für einen kontinuierlichen Betrieb hat es sich als günstig erwiesen, wenn das Elektrolyt in einen geschlossenen Kreislauf umgewälzt wird. Hierdurch wird das benötigte Elektrolytvolumen auf ein Minimum reduziert sowie ein unnötiges Anfallen von verbrauchtem Elektrolyt vermieden.

Bei einer bevorzugten Ausführungsform der vorliegenden Erfindung ist zudem vorgesehen, dass zur Einstellung des pH-Wertes ein Elektrodialyseverfahren verwendet wird. Ein solches Elektrodialyseverfahren kann beispielsweise mittels einer Elektrodialysezelle ausgeführt werden. Die Elektrodialyse ist ein elektrochemisch getriebener Membranprozess, in dem Ionenaustauscher-Membranen in Kombination mit einer elektrischen Potentialdifferenz benutzt werden, um ionische Bestandteile zu trennen. Mit Hilfe solcher Elektrodialysezellen ist es möglich, ein Elektrolyt in einen sauren und einen basischen Bestandteil aufzutrennen. Jeder dieser Bestandteile kann einen erfindungsgemäßen Teilstrom bilden, der im Rahmen des erfindungsgemäßen Verfahrens einsetzbar ist. Dabei hat sich bewährt, einen sauren Teilstrom mit einem pH-Wert zwischen 1 und 3 und einen basischen Teilstrom mit einem pH-Wert von 11 bis 13 zu verwenden. Darüber hinaus hat es sich gezeigt, dass nach erfolgter elektrochemischer Bearbeitung der saure Teilstrom durch Zugabe des basischen Teilstroms in seinem pH-Wert soweit erhöht werden kann, dass die gelösten Metallanteile Hydroxide bilden. Dies ist im Bereich von pH-Werten zwischen 7 und 9, insbesondere bei einem pH-Wert von 8, vorteilhaft realisierbar.

Des Weiteren können die erfindungsgemäßen Aufgaben auch mit einer Vorrichtung gemaß Anspruch 6 gelöst werden.

Die hier benannte Vorrichtung eignet sich insbesondere zur Durchführung des erfindungsgemäß beschriebenen Verfahrens, so dass hier auf die entsprechenden Erläuterungen voll Bezug genommen wird.

Das Einstellmittel ist so zu wählen, dass es zur Erhöhung und/oder Verminderung des pH-Wertes geeignet ist. Dazu ist bei einer ganz besonders bevorzugten Ausführungsform der Erfindung vorgesehen, dass das Einstellmittel eine Elektrodialysezelle ist. Die Elektrodialysezelle ist in der Lage, ein vorhandenes Elektrolyt aufzuteilen. Ein Teil des Elektrolyts wird dabei in seinem pH-Wert verringert, wohingegen der andere Teil des Elektrolyts in seinem pH-Wert erhöht wird. Die mittels der Elektrodialysezelle aufgeteilten Teilmengen des Elektrolyts können in getrennten Teilströmen von der Elektrodialysezelle abgeführt werden. Ein Teilstrom, nämlich der mit dem abgesenkten pH-Wert, wird dazu vorzugsweise durch den Bearbeitungsraum geleitet, wohingegen der zweite Teilstrom, nämlich der mit dem erhöhten pH-Wert, vorzugsweise an dem Bearbeitungsraum vorbeigeleitet wird.

Dabei ist an der Vorrichtung die Zuführeinrichtung so ausgebildet, dass sie erste Leitungsmittel für einen Elektrolyt mit reduziertem pH-Wert aufweist. Dieses erste Leitungsmittel führt das in seinem pH-Wert-veränderte Elektrolyt vom Einstellmittel hin in den Bearbeitungsraum.

Dabei ist vorgesehen, dass die Zufiihreinrichtung ein zweites Leitungsmittel für ein Elektrolyt mit erhöhtem pH-Wert aufweist. Dieses zweite Leitungsmittel leitet das Elektrolyt vom Einstellmittel weg und am Bearbeitungsraum vorbei.

Wie bereits im Zusammenhang mit dem zuvor beschriebenen Verfahren erwähnt, ist die erfindungsgemäße Vorrichtung vorteilhafterweise so ausgebildet, dass das Zuführmittel als geschlossener Kreislauf ausgebildet ist. Hierdurch kann das verwendete Elektrolyt innerhalb der Bearbeitungsvorrichtung zirkulieren und muss nicht ständig abgeführt bzw. durch neues Elektrolyt ersetzt werden.

Sowohl für das erfindungsgemäße Verfahren, als auch die erfindungsgemäße Vorrichtung ist es bei einem kontinuierlichen Betrieb vorteilhaft, wenn das Elektrolyt mittels einer Filtereinrichtung gefiltert wird. Hierdurch können die im Elektrolyt gelösten Metalle bzw. gebildeten chemischen Verbindungen, welche beispielsweise als Schwebstoffe vorliegen können, aus dem Elektrolyt herausgefiltert werden. Als Filtereinrichtung kommen insbesondere Kammerfilterpressen zum Einsatz.

Weiterhin kann im Rahmen der vorliegenden Erfindung vorteilhafterweise vorgesehen werden, dass ein Teilstrom, insbesondere ein Teilstrom mit einem erhöhten pH-Wert, aufgeteilt und an unterschiedlichen Stellen des Kreislaufes dem Teilstrom mit verringertem pH-Wert zugemischt wird.

Darüber hinaus kann es auch vorteilhaft sein, wenn in Teilbereichen, insbesondere solchen die hinter dem Bearbeitungsraum liegen, der aus dem Bearbeitungsraum abgeführte Teilstrom in seinem pH-Wert erhöht wird, bis zu einem Bereich zwischen den pH-Werten 7 und 9. Hierdurch kann die Bindung von Metallhydroxiden in besonders effizienter Weise erreicht werden, die nachfolgend beispielsweise mittels der Filteranlage aus dem Elektrolyt entfernt werden. Dabei kann das Einstellmittel, was beispielsweise als Elektrodialysezelle ausgeführt ist, unter Umständen zusätzlich durch eine Zudosierung von basischem Elektrolyt oder anderen basischen Stoffen unterstützt werden.

Darüber hinaus kann im Rahmen der vorliegenden Erfindung vorteilhafterweise vorgesehen sein, dass nach dem Bearbeitungsraum zumindest ein Neutralisationsbehälter angeordnet ist, in welchem die Teilströme mit verringertem und mit erhöhtem pH-Wert zusammengeführt werden, bevor diese vollständig oder zumindest teilweise neutralisierter Form in einen Vorratsbehälter weitergeleitet werden. Vorzugsweise sind die vorgesehenen Filtereinrichtungen vor diesem Vorratsbehälter angeordnet, so dass sich im Vorratsbehälter ausschließlich frisches und zur weiteren Zirkulation bereites Elektrolyt befindet.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, auf die sie jedoch nicht bcschränkt ist. In der Zeichnung zeigt schematisch:

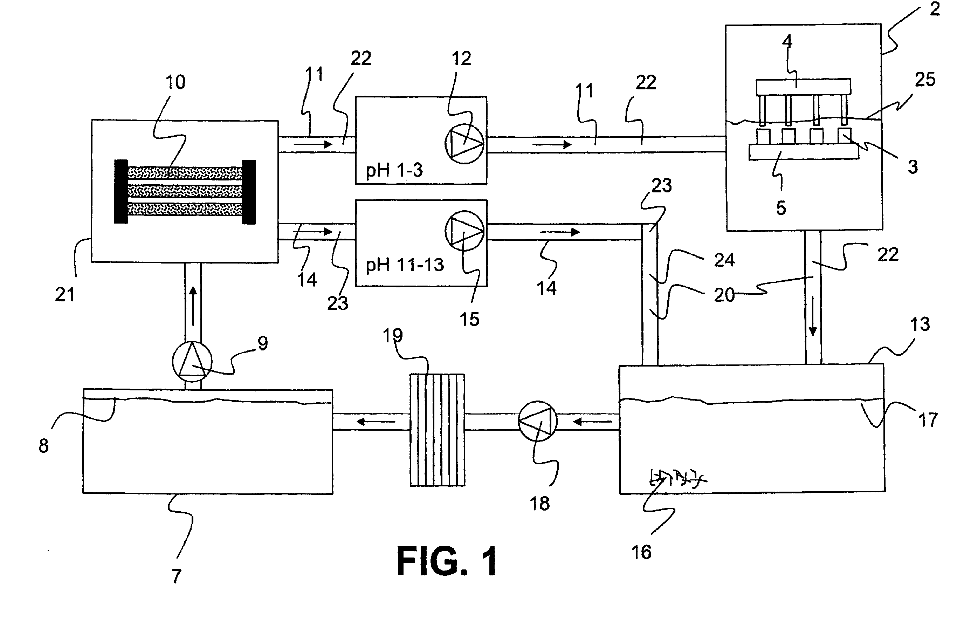

Fig. 1: eine erfindungsgemäße Bearbeitungsvorrichtung mit Einstellmitteln und zwei Teilströmen.

In Fig. 1 ist eine erfindungsgemäße Bearbeitungsvorrichtung 1 zur elektrochemischen Bearbeitung dargestellt. Rechts oben ist ein Bearbeitungsraum 2 dargestellt, in dem vier Bauteile 3 zur elektrochemischen Bearbeitung angeordnet sind. Die Bauteile 3 sind an einer Anode 5 befestigt. Oberhalb der Bauteile 3 befindet sich die entsprechend zur Bearbeitung vorgesehene Kathode 4. Innerhalb des Bearbeitungsraumes 2 ist zusätzlich ein Elektrolyt 6 vorgehalten, welches die Bauteile 3 benetzt und umspült.

Die Funktionsweise der dargestellten Bearbeitungsvorrichtung wird im Folgenden ausgehend von einem Vorratsbehälter 7 beschrieben. In dem Vorratsbehälter 7 befindet sich ein pH-Wert neutrales Elektrolyt 8. Unter neutral wird in dem vorliegenden Fall ein pH-Wert von ca. 7 verstanden. Je nach Anwendungsfall kann als Ausgangspunkt jedoch auch ein Elektrolyt mit einem anderen pH-Wert gewählt werden. Das neutrale Elektrolyt 8 wird mittels einer ersten Pumpe 9 zu einer Elektrodialysezelle 10 gepumpt, wo eine pH-Wert Änderung stattfindet. Die Elektrodialysezelle 10 bildet dabei ein Einstellmittel 21 zur Einstellung des gewünschten pH-Wertes

Unter einer pH-Wert Änderung wird im Rahmen der vorliegenden Erfindung insbesondere eine kontinuierlich erzeugte Veränderung eines pH-Wertes verstanden. Das bedeutet, der pH-Wert erfährt am Einstell- bzw. Änderungsmittel einen Wertsprung. Diese Veränderung ist im Rahmen der elektrochemischen Bearbeitung kontinuierlich und unterscheidet sich hierdurch von einer einmaligen Einstellung des pH-Werts, wie sie beispielsweise beim Befüllen einer Bearbeitungsvorrichtung 1 mit einem pH-Wert einmalig vorgenommen wird.

Die Elektrodialyezelle 10 trennt das zunächst neutrale Elektrolyt 8 auf. Dabei wird ein Teil des Elektrolyts in seinem pH-Wert abgesenkt und ein Teil des Elektrolyts in seinem pH-Wert erhöht. Der im pH-Wert reduzierte Teil des Elektrolyts 25 weist dabei vorzugsweise einen pH-Wert zwischen 1 und 3 auf, wohingegen der in seinem pH-Wert erhöhte Teil des Elektrolyts 24 einen pH-Wert zwischen 11 und 13 aufweist. Der pH-Wert reduzierte Teil des Elektrolyts 25 wird über einen ersten Teilstrom 11 mittels einer zweiten Pumpe 12 über erste Leitungsmittel 22 hin in den Bearbeitungsraum 2 gefördert. Damit befindet sich im Bearbeitungsraum 2 ausschließlich ein saures in seinem pH-Wert reduziertes

Elektrolyt 25. Nachdem das Elektrolyt die Bauteile 3 umspült hat, wird es über den ersten Teilstroms 11 weiter in einen Neutralisationsbehälter 13 abgeleitet.

Der an der Elektrodialysezelle 10 in seinem pH-Wert erhöhte Teil des Elektrolyts 24 wird über einen zweiten Teilstrom 14 mittels einer dritten Pumpe 15 durch zweite Leitungsmittel 23 am Bearbeitungsraum 2 vorbei in den Ncutralisationsbchälter 13 gefördert. Im Neutralisationsbehälter 13 vermischen sich der erste Teilstrom 11 und der zweite Teilstrom 14, wobei eine Neutralisation erfolgt. Dabei kann unter bestimmten Voraussetzungen ein Teil des im Bcarbeitungsraum 2 von den Bauteilen 3 gelösten Werkstoffes reagieren. Insbesondere die im Elektrolyt 25 des ersten Teilstroms 11 gelösten Metalle können im Ncutralisationsbehälter zu Metallhydroxiden reagieren und sich am Boden des Neutralisationsbehälters 13 als Feststoffe 16 ablagern. Das neutralisierte Elektrolyt 17 wird im Weiteren durch eine vierte Pumpe 18 vom Neutralisationsbehälter 13 durch eine Filtereinrichtung 19 in den Vorratsbehälter 7 gefördert. Mittels der Filtereinrichtung 19 werden die restlichen im Elektrolyt 17 vorhandenen Schwebstoffe herausgefiltert, so dass im Vorratsbehälter 7 ausschließlich gereinigtes und neutrales Elektrolyt 8 für die weitere Zirkulation im Kreislauf der Bearbeitungsvorrichtung 1 bereitsteht.

Die so gemäß der Erfindung gestaltete Bearbeitungsvorrichtung 1 verhindert damit effizient die Bildung von Ablagerungen an Bauteilen oder Elektroden, wie der Kathode 4 und der Anode 5.

Damit kann die elektrochemische Bearbeitung in der erfindungsgemäßen Bearbeitungsvorrichtung 1 frei von Ablagerungen ausgeführt werden. Zudem ist eine Zirkulation und damit Mehrfachnutzung des Elektrolyts 8 über besonders lange Betriebszeiten möglich, wodurch auch die Kosten der Bearbeitung sinken.

Im Übrigen ist die vorliegenden Erfindung nicht auf die dargestellten Ausführungsformen beschränkt. Es sind vielmehr zahlreiche Abwandlungen der Erfindung im

Rahmen der Patentansprüche möglich. So können beispielsweise anstelle der in Fig. 1 gezeigten direkten Verbindung zwischen der Elektrodialysezelle 10 und dem Neutralisationsbehälter 13, die in ihrem pH-Wert erhöhten Mengen des Elektrolyts 24 auch in mehrere Teilströme aufgeteilt und an unterschiedlichen Stellen d. h. einer Mehrzahl von Zusammenführungen dem ersten Teilstrom 11 beigemischt werden.

Darüber hinaus ist es neben der Verwendung der Elektrodialysezelle als Einstellmittel auch möglich, zusätzliche oder andere Einstellmittel, an verschiedenen Stellen des Elektrolytkreialaufs 20 anzuordnen, um dort die gewünschten pH-Wert Veränderungen auszuführen.

### Bezugszeichenliste

- 1: Bearbeitungsvorrichtung
- 2: Bearbeitungsraum
- 3: Bauteil
- 4: Kathode
- 5: Anode
- 6: Elektrolyt
- 7: Vorratsbehälter
- 8: Elektrolyt, neutral und gereinigt
- 9: erste Pumpe
- 10: Elektrodialysezelle
- 11: erster Teilstrom
- 12: zweite Pumpe
- 13: Neutralisationsbehälter
- 14: zweiter Teilstrom
- 15: dritte Pumpe
- 16: Feststoff
- 17: neutralisiertes Elektrolyt
- 18: vierte Pumpe
- 19: Filtereinrichtung
- 20: Kreislauf
- 21: Einstellmittel
- 22: erste Leitungsmittel
- 23: zweite Leitungsmittel
- 24: Elektrolyt, pH-Wert-erhöht
- 25: Elektrolyt, pH-Wert-reduziert

## Patentansprüche

1. Verfahren zur elektrochemischen Bearbeitung wenigstens eines Bauteils (3), bei dem das Bauteil (3) zumindest teilweise von einem Elektrolyt umschlossen wird, umfassend die Schritte:
- Fördern eines Elektrolyts aus einem Vorratsbehälter: **gekennzeichnet durch** das
- Aufteilen des Elektrolyts in zumindest einem Einstellmittel in einen eingestellten sauren Teilstrom mit einem venninderten eingestellten pH-Wert, insbesondere mit einem pH-Wert zwischen 1 und 3. und in einen basischen Teilstrom mit einem erhöhten pH-Wert, insbesondere mit einem pH-Wert von 11 bis 13,;
- Zuführen des Teilstroms mit dem abgesenkten pH-Wert zu dem wenigstens einen Bauteil (3) in einem Bearbeitungsraum sowie elektrochemisches Bearbeiten des wenigstens einen Bauteils;
- Vorbeiführen des Teilstroms mit dem erhöhten pH-Wert an dem Bearbeitungsraum; und
- Zusammenführen der Teilströme nach dem Vorbeiführen des Teilstroms mit dem erhöhten pH-Wert an dem wenigstens einen Bauteil (3), wobei ein pH-Wert in einem Bereich von 7 bis 9 erreicht wird.

2. Verfahren nach Anspruch 1, wobei der verminderte pH-Wert und der erhöhte pH-Wert so gewählt werden, dass sich die zugehörigen Teilmengen gegenseitig neutralisieren können.

3. Verfahren nach einem der vorhergehenden Ansprüche, wobei beide Teilmengen (11, 14) nach dem wenigstens einen Bauteil (3) zur Neutralisation gemischt werden.

4. Verfahren nach einem der vorhergehenden Ansprüche, wobei das Elektrolyt in einem geschlossenen Kreislauf (20) umgewälzt wird.

5. Verfahren nach einem der vorhergehenden Ansprüche, wobei zur Einstellung des pH-Wertes ein Elektrodialyseverfahren verwendet wird.

6. Vorrichtung (1) zur elektrochemischen Bearbeitung wenigstens eines Bauteils (3), die einen Bearbeitungsraum (2) mit Elektrolyt und wenigstens eine Zuführeinrichtung für den Elektrolyt zu dem Bearbeitungsraum (2) aufweist, **dadurch gekennzeichnet, dass** in dem Elektrolytkreislauf vor dem Bearbeitungsraum (2) zumindest ein Einstellmittel (21) zur Einstellung des pH-Wertes des Elektrolyts vorgesehen ist, wobei das Einstellmittel (21) ein vorhandenes Elektrolyt so aufteilt, dass ein Teil des Elektrolyts in seinem pH-Wert verringert und ein anderer Teil des Elektrolyts in seinem pH-Wert erhöht wird und wobei das Einstellmittel (21) erste Leitungsmittel (22) und zweite Leitungsmittel (23) aufweist, wobei der erste Teil des Elektrolyts an das erste Leitungsmittel! (22), und der zweite Teil des Elektrolyts an das zweite Leitungsmittel (23) herangeführt wird, wobei das erste Leitungsmittel (21) mit der Zufiihreinrichtung verbunden ist.

7. Vorrichtung (1) nach Anspruch 6 wobei das Einstellmittel (21) eine Elektrodialysezelle (10) ist.

8. Vorrichtung (1) nach einem der vorhergehenden Ansprüche 6 oder 7, wobei das Zuführmittel als geschlossener Kreislauf (20) ausgebildet ist.

## Claims

1. Method for the electrochemical treatment of at least one component (3), in which the component (3) is surrounded at least partially by an electrolyte, comprising the steps:
- conveyance of an electrolyte out of a reservoir; **characterized by** the
- division of the electrolyte in at least one setting means into an acid part stream with a reduced set pH value, in particular with a pH value of between 1 and 3; and a basic part stream with an increased pH value, in particular with a pH value of 11 to 13;
- feed of the part stream with the lowered pH value to the at least one component (3) in a treatment space and electrochemical treatment of the at least one component;
- leading of the part stream with the increased pH value past the treatment space; and
- conveyance of the part streams after the part stream with the increased pH value is led past the at least one component (3), a pH value in a range of 7 to 9 being reached.

2. Method according to Claim 1, the reduced pH value and the increased pH value being selected so that the associated part quantities can be mutually neutralized.

3. Method according to either of the preceding claims, the two part quantities (11, 14) being mixed, downstream of the at least one component (3), for neutralization.

4. Method according to one of the preceding claims, the electrolyte being circulated in a closed circuit (20).

5. Method according to one of the preceding claims, an electrodialysis method being used for setting the pH value.

6. Device (1) for the electrochemical treatment of at least one component (3), which has a treatment space (2) with electrolyte and at least one supply arrangement for supplying the electrolyte to the treatment space (2), **characterized in that** at least one setting means (21) for setting the pH value of the electrolyte is provided in the electrolyte circuit upstream of the treatment space (2), wherein the setting means (21) divides an existing electrolyte such that the pH value of one part of the electrolyte is reduced and the pH value of another part of the electrolyte is increased, and wherein the setting means (21) has first conduction means (22) and second conduction means (23), wherein the first part of the electrolyte is introduced into the first conduction means (22) and the second part of the electrolyte is introduced into the second conduction means (23), wherein the first conduction means (22) is connected to the supply arrangement.

7. Device (1) according to Claim 6, the setting means (21) being an electrodialysis cell (10).

8. Device (1) according to either of the preceding Claims 6 or 7, the supply means being designed as a closed circuit (20).

## Revendications

1. Procédé de traitement électrochimique d'au moins un composant (3), dans lequel le composant (3) est entouré au moins en partie par un électrolyte, le procédé comprenant l'étape qui consiste à :
- amener un électrolyte provenant d'un récipient de réserve et étant **caractérisé par** les étapes qui consistent à :
- répartir l'électrolyte dans au moins un moyen d'ajustement en au moins un écoulement partiel acide dont le pH est réglé à une valeur abaissée, en particulier à une valeur comprise entre 1 et 3, et en un écoulement partiel basique dont la valeur du pH est relevée, en particulier à une valeur de 11 à 13,
- amener l'écoulement partiel dont la valeur du pH a été abaissée au composant ou aux composants (3) dans un espace de traitement et traiter électrochimiquement le ou les composants,
- faire balayer l'espace de traitement parl'écoulement partiel dont la valeur du pH est relevée et
- après avoir fait balayer le ou les composants (3) par l'écoulement partiel dont la valeur du pH est relevée, rassembler les écoulements partiels pour obtenir une valeur du pH comprise dans la plage de 7 à 9.

2. Procédé selon la revendication 1, dans lequel la valeur abaissée du pH et la valeur relevée du pH sont sélectionnées de telle sorte que les quantités partielles associées puissent se neutraliser mutuellement.

3. Procédé selon l'une des revendications précédentes, dans lequel après le ou les composants (3), les deux quantités partielles (11, 14) sont mélangées pour neutralisation.

4. Procédé selon l'une des revendications précédentes, dans lequel l'électrolyte est mis en circulation en circuit fermé (20).

5. Procédé selon l'une des revendications précédentes, dans lequel un procédé d'électrodialyse est utilisé pour ajuster la valeur du pH.

6. Dispositif (1) de traitement électrochimique d'au moins un composant (3), le dispositif présentant un espace de traitement (2) qui contient de l'électrolyte et au moins un dispositif d'amenée de l'électrolyte vers l'espace de traitement (2), **caractérisé en ce que**
au moins un moyen d'ajustement (21) est prévu dans le circuit d'électrolyte en amont de l'espace de traitement (2) pour ajuster la valeur du pH de l'électrolyte,
**en ce que** le moyen d'ajustement (21) divise un électrolyte présent de telle sorte qu'une partie de l'électrolyte ait la valeur de son pH abaissée et qu'une autre partie de l'électrolyte ait la valeur de son pH relevée,
**en ce que** le moyen d'ajustement (21) présente des premiers moyens de conduit (22) et des deuxièmes moyens de conduit (23),
**en ce que** la première partie de l'électrolyte est amenée sur le premier moyen de conduit (22) et la deuxième partie de l'électrolyte sur le deuxième moyen de conduit (23) et
**en ce que** le premier moyen de conduit (22) est relié au dispositif d'amenée.

7. Dispositif (1) selon la revendication 6, dans lequel le moyen d'ajustement (21) est une cellule d'électrodialyse (10).

8. Dispositif (1) selon l'une des revendications 6 ou 7 qui précèdent, dans lequel le moyen d'amenée est configuré comme circuit fermé (20).
